# EUROPEAN PATENT APPLICATION

(11) **EP 3 403 806 A1**
(43) Date of publication of application: **21.11.2018**
(21) Application number: 17171756.4
(22) Date of filing: 18.05.2017
(51) Int. Cl.: B29C 64/106, B29C 64/194, B29C 64/314, B33Y 10/00, B33Y 70/00

(54) **HIERARCHICAL POROUS STRUCTURE**

(71) Applicant: ECOLE POLYTECHNIQUE FEDERALE DE LAUSANNE (EPFL), 1015 Lausanne (CH)
(72) Inventor: MARASCIO, Matteo, 1015 Lausanne (CH); BOURBAN, Pierre-Etienne, 1260 Nyon (CH); PIOLETTI, Dominique, 1164 Buchillon (CH)
(74) Representative: Grosfillier, Philippe

(57) **Abstract**

Cellular thermoplastic structures with hierarchical multi-scale porosity (preferably 1-300 µm micro-porosity to 0.3-10 mm macro-porosity) are produced from an integrated approach of 3D printing, preferably by Fused Deposition Modeling (FDM), and of supercritical gas foaming (SCF). Porous filaments or strands and related hierarchical structures are processed in one continuous step. The influence of printing parameters (e.g. deposition temperature and speed) on foam morphology and pores distribution is described for a thermoplastic based polymer. The process may be applied to other thermoplastic filaments, or strands, with different properties. Such strands are combined in 3D configurations to create hierarchical structures. The process according to the invention offers for the first time the possibility to fine tune cellular morphology at different scales in a continuous way, and provides an unmatched freedom to design anisotropy in three dimensions.

## Description

### Field of invention

The present invention relates to hierarchical porous structures that are obtained by Additive Manufacturing (AM) processes.

### State of the art

Hierarchical porous structures have been a focus in the last years in different fields, thanks to the diverse properties associated to multi-scale features^{[1,2]}. Their unusual attributes derive from the precise functional adaptation of the structure at all levels of hierarchy. Classical examples are biological materials, such as wood, trabecular bone, butterfly, leaves, etc. The observation and understanding of such materials have inspired new processes to produce synthetic hierarchical structures. Such hierarchical porous materials have shown significant potential in many applications, as energy conversion and storage, catalysis, separation, tissue engineering and drug delivery. Polymers in particular gathered a burgeoning interest because of the easy processing, reproducible properties and market availability, allowing to produce structures at high strength/density ratio and high surface area with defined porosity^{[3-5]}. A wide group of methods has been developed to control design and synthesis of hierarchical porous polymers. While most of them involve the use of organic and halogenated solvents, solvent free alternatives have been proposed to answer the global environmental pollution and matching biomedical and pharmaceutical purity needs. Conventional solvent-free techniques, like gas foaming^{[6-9]}, ionic liquids^{[10]} and fluorous solvents^{[11-13]} have been applied to produce hierarchical porous structure with a wide range of polymers. However, interconnectivity, fine control of porosity gradient and production of multi-scale hierarchical structures are still to be fully achieved. With the development of additive manufacturing technologies, and specifically Fused Filament Fabrication (FFF) for thermoplastic materials, a solution to accurately control the 3D shape and porosity distribution is offered ^{[14-16]}. Shape complexity and interconnectivity can be easily tuned to produce complex pattern of open/closed porosity, opening new possibilities in fields where pores size and mechanical gradients are crucial. An example is the creation of scaffold for tissue engineering to sustain and enhance cells growth and differentiation^{[17-20]}. A principal limitation of FFF is features resolution, due to the minimum achievable distance between two different strands. Reduction of the nozzle size and fine machine tuning lead to achieve macropores of 0.2-0.3mm, but also required a significant production time and does not introduce the possibility to reduce the strain density.

Different strategies have been adopted to overcome these limitations, like creating a micro-porosity within the strands by particulate leaching^{[21,22]} or by supercritical batch foaming^{[23]}. Solvent casting/particulate leaching is a simple and common method to produce a control pores size and porosity, which however lead to inhomogeneous cellular structures due to agglomeration of particulates^{[24]}. Moreover, an additional step is required to homogenize the porogen particulates within the material, which involves the use of solvents or the loss of material during the melt compounding. Even though this dual micro and macro-porosity reduced the structure stiffness and enhanced bulk permeability^{[25]}, the process control is still limited and does not allow to produce predefined porosity gradients. In particular, the creation of a continuously varying micro and macro-porosity gradient is still impossible and limited to the porogen concentration and particle size for salt leaching and to CO₂ diffusion in batch foaming.

### Description of the invention

The present invention consists in a new and original additive manufacturing process for obtaining a custom 3D structure with a preferably continuously well-controlled macro and micro porosity. The invention also includes any structure that may be obtained by this process and any 3D printer that is adapted for using the said AM process.

The invention more precisely concerns different objects as defined in the claims.

One essential feature of the invention is the supercritical gas foaming of a molten material, prior or during deposition.
After the extrusion step, the molten material forms a filament that is subsequently transformed into a plurality of strands.
The supercritical gas foaming, that can be for instance a CO₂ foaming, induces a microporosity within the strands.
A macroporosity is generated by the spaces between the strands.

Nozzle geometry, temperature and printing speed are adjusted to control the quantity and morphology of the micro pores, allowing creating complex 3D multi-scale structures. The depressurization and cooling rates are thus control continuously to generate various porosities along the strand. Porosity gradients are also obtained in the radial direction of the strands. The process has been extensively investigated for a model material, a food grade Poly-Lactide acid, to understand the influence of processing parameters and saturation on strand expansion and morphology. In particular, pores distribution, formation of open/close porosity and constitution of core-shell structures is shown to be strictly related to printing parameters and therefore tunable during the deposition process. This allows creating complex morphologies while printing, offering for the first time a tool to achieve three-dimensional anisotropy for thermoplastic materials in a simple way. A behavioral model to predict foaming condition was then established and applied to two medical materials, a composite of Poly-L-Lactide and β Tricalcium phospates (PLA/βTCP) and a copolymer Poly-Lactide-co-Caprolactone (PLCA), showing the feasibility of the process to produce complex hierarchical structures for hard and soft tissue engineering applications.

The invention will be better understood below, with illustrated examples.

### Brief description of the figures:

**Figure 1** shows one example of a process according to the invention.
**Figure 2** shows a foam printing head
**Figure 3** illustrates the influence of printing temperature and printing speed on strands expansion at the nozzle exit.
**Figure 4** shows the influence of processing parameters
**Figure 5** shows the bonding between two adjacent strands
**Figure 6** illustrates a multilayered strand structure

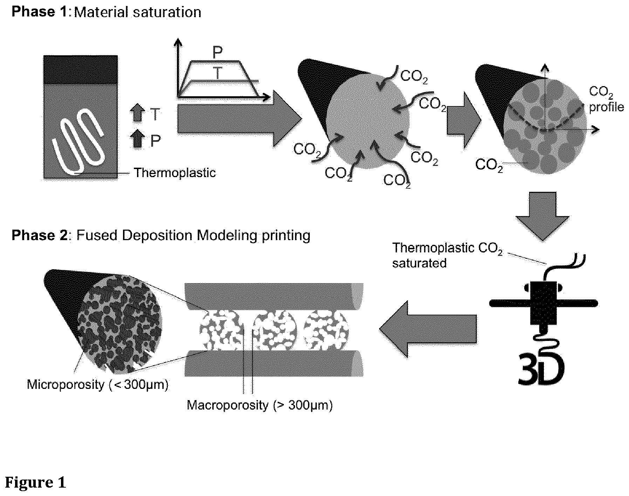

As shown on figure 1, the process starts by a gas saturation step of a thermoplastic filament, powder or granule to induce CO2 diffusion into the material (Phase 1). During a 3D additive manufacturing process such as the Fused Deposition Modeling (FDM) the filament is deposited in smaller strands (from 0.4 to 2 mm). Spacing the strands during the deposition a macroporosity (0.3 to 10 mm) is created. Additionally, CO₂ nucleates and escapes from the strands, leaving a radially and longitudinally controlled microporosity (1 µm to 300 µm) during the printing.

In the example of figure 1, a 1.75 mm FDM filament of a food grade PLA is dried overnight at 90 °C, weighted and saturated with supercritical CO₂ at different temperatures, from 25 °C to 120 °C, and pressures, from 75 bars to 150 bars. The material is then depressurized from the saturation setpoint to 1 bar at rates between 0.1 bar/s to 70 bar/s until reaching the atmosphere pressure. The filament is extracted and weighted again to determine the CO₂ %w, targeting a range between 6%w to 20w% to avoid pre-foaming of the filament prior to extrusion. For example the chosen conditions as being at low temperature (below Tg), pressure and saturation time fast enough to be integrated in a one-step process, is at 50 °C, 90 bars, 60 minutes and 0.1 bar/s depressurization, giving a carbon dioxide content in the filament of 14%w.

The PLA/carbon dioxide composite filament was extruded with a Makerbot Replicator 2 at different temperatures from 180 °C, lower extrusion temperature, to 250 °C, PLA degradation temperature. Extrusion speeds were from 10 mm/s to 100 mm/s. Nozzle diameter was set to 1 mm to allow strand expansion and better observe the micro-porosity distributed in the extruded foam. Six cross-sections for each couple of extrusion temperature and speed were taken and analyzed by Scanning Electron Microscopy to determine pores morphology and distribution. Carbon coating of 20 nm and 10 kV electron beam were applied on the samples to produce optimal images.

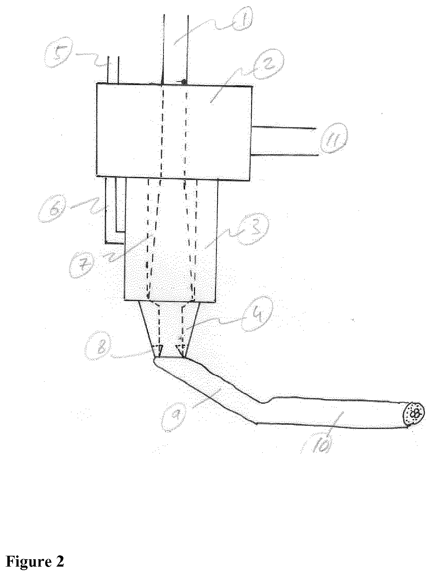

As shown on figure 2, a foam printing of strand is obtained by the saturation of the material before or during the deposition as described in the schematic of the foam printing head, a technology that can be adapted/fixed to existing 3D printers via the connection **11**.
The head comprises a material feeding channel **1**, a saturation chamber **2**, an expansion chamber **3**, a foam extrusion nozzle **4** with optionally a skin abrasion device **8**. The inlet **5** provides the gas and the pipe **6** recycles the gas and thus controls the pressure into the saturation chamber and the deposition head **4**. All elements **2**, **3**, **4** are controlled in temperature during heating and cooling steps. The inserts 7 and 4 have open angles for additional control of depressurization.
The continuously deposited strand has different longitudinal and radial morphologies **9**, **10**.

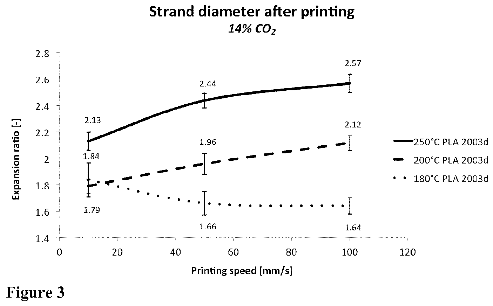

Strands diameter was doubly measured with a precision caliper on a population of n=12 samples, obtained at the same conditions but different times and Image J SEM analysis. Figure 3 provides a visual overview on the obtained results. At 250 °C and 200 °C strands diameter increases constantly from 2.13 mm ± 0.068 mm to 2.57 mm ± 0.070 mm with the increase of printing speed in the first case and from 1.79 mm ± 0.053 mm to 2.12 mm ± 0.060 mm in the latter. T-test indicates a statistical difference with p < 0.01. Interestingly, at 180 °C the positive trend switched to a negative correlation between temperature and printing speed, with the strands diameter decreasing from 1.84 mm ± 0.128 mm to 1.64 mm ± 0.061 mm. No statistical difference (p > 0.1) has been shown between printing at 10 mm/s at 180 °C (1.84mm ± 0.128mm) and at 200 °C (1.79 mm ± 0.053 mm). The negative correlation at 180 °C between strands diameter and printing speed can be explained by the heat exchange between the heating block and the material. At 180 °C the heat transfer to the polymer is insufficient to produce a large expansion rate, given the low chains mobility and thus a low cells growth leading to smaller pores. When increasing the printing speed the material will experience a lower residence time in the heating block and thus an even lower growth of cells. Pores size and strands diameter decreased to the minimum value observed of 1.64 mm ± 0.061 mm. Viscosity, which has a minor influence here due to the insufficient heat transfer, has an important role to explain the strands diameter positive correlation with temperature and printing speed for heating temperature above 200 °C. As demonstrated by rheological analysis^{[26]}, material viscosity decreases exponentially with the increase of printing temperature and speed. High printing temperature leads also to a more uniform heat distribution experienced by the material in the heating block, allowing a fast cell growth and thus higher porosity and strands expansion during the depressurization at the exit of the nozzle. The same behavior is shown for printing speed: PLA has well known shear-thinning properties, meaning that at higher shear stresses the viscosity will decrease. A decrease of viscosity, keeping constant nozzle diameter and temperature, is expected to lead to an easier CO₂ nucleation and therefore higher expansion rate, as observed with the increase of strands diameter.

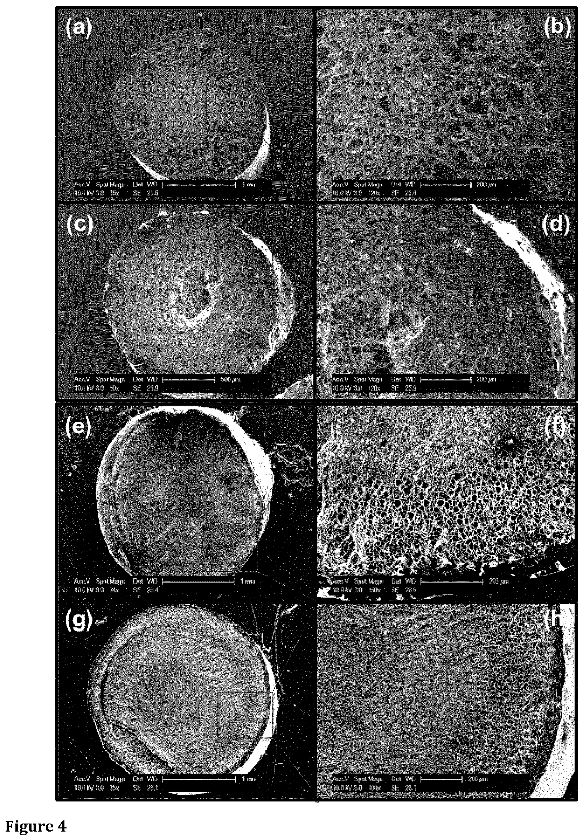

Influence of processing parameters, as extrusion temperature and speed on strand morphology and pores distribution, investigated in the range of 180 to 250 °C and from 10 to 100 mm/s, are shown in Figure 4. Nozzle size was set to 1 mm and CO₂ concentration to 14%w, which represented an optimal saturation condition in terms of strand expansion, saturation time and temperature. On the left column (a, c, e, g) the overall morphologies are shown (scale bar 1 mm), while on the right column (b, d, f, h) zooms at 200 µm scale shows porosity distribution, typology (open/closed cells) and pores size.
At 180 °C a radial core-shell structure is formed, with a well-defined skin at the surface of the strand of about 100 µm thickness with a sharp interface between the core porosity and the bulk shell.
As observed in polymer foaming, the heat transfer induces a rapid cooling of the outer skin even before development of pores or cells. This phenomenon is promoted as well by the high viscosity and low depressurization rate encountered here. At higher temperatures and subsequent lower polymer viscosity or/and higher depressurization rates of the other conditions the thick skin has disappeared. At this low temperature and deposition speed the average porosity in the core is 53.23% with larger size pores close to the skin where the gas couldn't escape and thus promoted the growth of pores. With the increase of the extrusion rate to 100 mm/s, a higher depressurization induces a more homogenous nucleation of smaller pores everywhere through the section. A smoother gradient in porosity is observed with large cells at the center to smaller cells with some open to the surrounding environment. Furthermore, the collapsing of cells at the center generates a hollow-like structure with a continuous channel of about 300 µm diameter. Longitudinal flow can be considered with this type of hollow filament.
At 250 °C and 10 mm/s, the average porosity is 68.0 %, the pore size is reduced when compared to lower temperatures but the foaming expansion is larger. The temperature has reduced the viscosity offering a polymer state more favorable to homogeneous foaming. A well-defined porosity gradient is therefore formed, with pores size increasing gradually from the outer edge to the center. The core of the strand showed to be more confined and less pore growth occurs, while in the outer volume of the filament large pore will offer higher diffusion paths. Increasing the extrusion rate at 100 mm/s always generates more nucleation sites and therefore more but smaller cells are created. The average porosity is 65.8 % and the porosity gradient is reduced. By this porosity content and morphology can be varied along the length of a strand by tuning the temperature and rate continuously.

When directly comparing, the results obtained at the two extrusion temperatures, guidelines to tailor on line the morphology of a filament can be proposed. Indeed, the average pore size is reduced by increasing the deposition speed or the temperature because of the induced higher depressurization rate which promotes more cell nucleation and gives less time for cell growth. The distribution of pore sizes and the pore density is as well influenced by heat transfer conditions. The temperature- and therefore viscosity-gradient through the filament is modified by the initial polymer and surrounding temperatures as its variation with time is linked to the deposition speed. By this, core-skin filaments or hollow filaments could be created and deposited simultaneously.

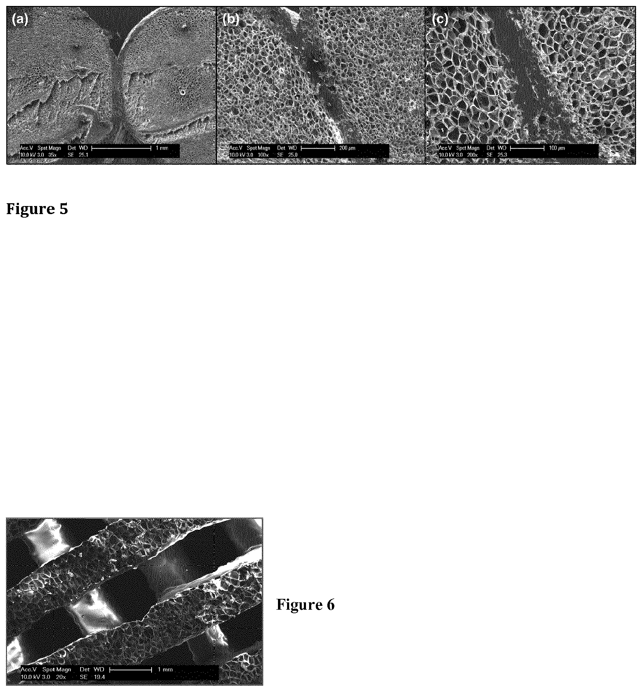

A multifilament structure obtained with deposition parameters of 220 °C and 25 mm/s, of polymer with 14%w CO₂ content was then sliced and analyzed at SEM with the methodology previously described. In Figure 5 it is possible to observe how the filaments foamed during deposition and bond together with a thick interface of about 150 µm. Intimate contact and interdiffusion^{[27]} are obtained locally between two filaments during the fusion bonding. The pressure drives the first bonding phenomenon. Here the expansion of the filament during deposition brings additional pressure for reaching intimate contact. The interfacial structure goes gradually from cellular intra filament structure to bulk interface and then again to cellular porous structure.
The possibility to layer different filaments/strands with internal specific microstructures (Figure 6) to create complex 3D shapes of foamed materials is thus demonstrated and expands the versatility of the classical FDM and FFF. Core-shell porous structure is a well-known morphology in nature, being in compliant vegetables structures or in stiff bone ^{[28]}. Furthermore structures combining oriented filaments each having different properties and functions is of main interest in the new generation of functional composites for engineering applications. Implants where vascularization or drug delivery can benefit from anisotropic porosities therefore with various diffusion paths and flow kinetics will certainly be part of the coming generation of body regeneration and repair solutions.

As previously discussed, strands diameter (e.g. pores size and porosity) can be adjusted varying the processing parameters (printing speed and temperature). In particular, the strands expansion is observed to be maximum at 250 °C, limit temperature before to induce polymer degradation. For some applications, stiff composite filaments and deformable porous filaments might be required for the overall 3D structure or for some local or directional elements only. In the next examples, two FDA approved medical materials, will be screened at 250 °C to produce the maximum expected expansion. The first one, a Poly-L-Lactide based polymer from Evonik Poly-L-Lactide (L207s) and βTCP ceramic particles (PLAβTCP), was selected for bone regeneration applications. The second, a copolymer of Poly-Lactide and Poly-Caprolactone (PLCA), is a thermoplastic material widely applied to produce soft structure in tissue engineering applications^{[29,30]}. Printing speed was set to 50 mm/s, as soft materials (e.g. PLCA) are difficult to be printed at higher speeds due to jamming in the feeding system. Saturation cycles were chosen to: i) maximize the CO₂ content, ii) obtain a similar w%CO₂ content in each material and iii) keep saturation time as short as possible. Ten w%CO₂ was reached for both the materials priori printing.
Following the same protocol of saturation and printing described above a composite filament of PLAβTCP with 77.63% open porosity was obtained which could be used to directly 3D print bone scaffolds, guiding bone growth by controlling the 3D deposition of osteoconductive and stiff porous strands as previously demonstrated^{[31,32]}. In the latter case, PLCA strands showed a closed porosity (average 80.26%) and limited strand expansion, (average diameter: 1.42 mm). The already low stiffness of PLCA structures could be therefore further reduced to produce anisotropic soft foams, thanks to the low strand expansion during the printing.

### Applications

The hierarchical strands and structures provide several functions for different applications. The following list is not exhaustive:

Cartilage functions are provided by through the thickness gradients of stiffness, strength, toughness and strain given by orientation of collagen fibres. Placement of porous strands in similar orientation and of strands with different porosity and morphology gives access to the functions of cartilage implants for replacement and regeneration of damage cartilage. Impregnation of the porosities and of hollow strands by bioactive hydrogels induces selective and directional regeneration and allows to control cells delivery upon regeneration time.

Soft prosthesis with custom-shaped 3D printing of microcellular thermoplastic elastomer for breast, ears, soft cartilage tissues can be processed. 3D gradients of porosity and deformation offers local and global deformation as well as damping performance.

Alveolar implants as bone graft are required for different maxillofacial surgeries. Additive manufacturing of porous material allows to create customizable shapes at lower costs than CNC. The control over the micro porosity allows creating given mechanical gradient and channels to facilitate blood permeability.

Drug delivery systems based on polymers are ideal drug carriers, due to the ease of control of their degradation kinetic and degradation mechanisms. Supercritical foaming has shown the possibility to incorporate drugs in thermoplastic polymers. The micro porous strands can be arranged to control the in-situ drug delivery by varying a) strand density (e.g. lower density leads to faster degradation kinetic and drug delivery) b) structure permeability (e.g. higher permeability leads to faster degradation kinetic and drug delivery) c) strand thickness (e.g. higher thickness leads to higher concentration of material and drug delivery).

The hierarchical proposed strands and structures can be used to control fluid flows at different scales. Microfluidics applications and control of functions by transport of liquids to have local hydrostatic pressures and thus selective stiffness and damping or to activate micro-valves by local swelling of the polymer strands is possible with the presented structures and process.

The influence of printing parameters, such as hot-end temperature, nozzle diameter and printing speed on the final microstructure morphology has been determined for a PLA based polymer, copolymer and composite. Other polymers and composites can be used with the present invention, as far as they allow gas diffusion. The in situ foamed strands can be layered to create a 3D structure with a solid interface between two porosity gradients, controlling the microstructure at each layer by printing speed and temperature variation. This is one of the main advantage of this technology compared to e.g. solvent casting/particulate leaching, in which the material needs to be modified to include a porogen, e.g. a salt. Being able to control pores size, distribution and morphology online while printing, complex 3D gradients can be designed, creating dual porous hierarchical architectures with thermoplastic materials. The unmatched freedom to design of free form 3D hierarchical porous structure offers new opportunities in several fields such as drug delivery, energy storage, microfluidics and tissue engineering, where a tunable multi-scale porosity is highly demanded.

### References

[1] W. G. Bae, H. N. Kim, D. Kim, S. H. Park, H. E. Jeong, K. Y. Suh, Adv. Mater. 2014, 26, 675.
[2] S. Pina, J. M. Oliveira, R. L. Reis, Adv. Mater. 2015, 27, 1143.
[3] D. Wu, F. Xu, B. Sun, R. Fu, H. He, K. Matyjaszewski, Chem. Rev. 2012, 112, 3959.
[4] T. B. F. Woodfield, J. Malda, J. De Wijn, F. Péters, J. Riesle, C. A. Van Blitterswijk, Biomaterials 2004, 25, 4149.
[5] H. Tang, S. Wang, M. Pan, R. Yuan, J. Power Sources 2007, 166, 41.
[6] L. D. Harris, B. S. Kim, D. J. Mooney, J. Biomed. Mater. Res. 1998, 42, 396.
[7] O. R. Davies, A. L. Lewis, M. J. Whitaker, H. Tai, K. M. Shakesheff, S. M. Howdle, Adv. Drug Deliv. Rev. 2008, 60, 373.
[8] A. I. Cooper, Adv. Mater. 2003, 15, 1049.
[9] L. M. Mathieu, M. O. Montjovent, P. E. Bourban, D. P. Pioletti, J. A. E. Månson, J. Biomed. Mater. Res. - Part A 2005, 75, 89.
[10] M. J. Earle, K. R. Seddon, Pure Appl. Chem. 2000, 72, 1391.
[11] J. A. Gladysz, C. Emnet, in Handb. Fluorous Chem., 2005, pp. 11-23.
[12] I. Ryu, H. Matsubara, C. Emnet, J. A. Gladysz, S. Takeuchi, Y. Nakamura, D. P. Curran, in Green React. Media Org. Synth., 2007, pp. 59-124.
[13] L. P. Barthel-Rosa, J. A. Gladysz, in Coord. Chem. Rev., 1999, pp. 587-605.
[14] I. Gibson, D. W. Rosen, B. Stucker, Additive Manufacturing Technologies: Rapid Prototyping to Direct Digital Manufacturing, 2010.
[15] M. Vaezi, H. Seitz, S. Yang, Int. J. Adv. Manuf. Technol. 2013, 67, 1721.
[16] A. A. Zadpoor, J. Malda, Ann. Biomed. Eng. 2016, 1.
[17] I. Zein, D. W. Hutmacher, K. C. Tan, S. H. Teoh, Biomaterials 2002, 23, 1169.
[18] D. W. Hutmacher, J. Biomed. Mater. Res. 2001, 55, 203.
[19] H. N. Chia, B. M. Wu, J. Biol. Eng. 2015, 9, 4.
[20] K. F. Leong, C. M. Cheah, C. K. Chua, Biomaterials 2003, 24, 2363.
[21] S. S. Kim, H. Utsunomiya, J. A. Koski, B. M. Wu, M. J. Cima, J. Sohn, K. Mukai, L. G. Griffith, J. P. Vacanti, Ann. Surg. 1998, 228, 8.
[22] J. Zeltinger, J. K. Sherwood, D. A. Graham, R. Müeller, L. G. Griffith, Tissue Eng. 2001, 7, 557.
[23] M. Marascio, P.-E. Bourban, J.-A. M?nson, D. Pioletti, Front. Bioeng. Biotechnol. n.d., DOI 10.3389/conf.FBIOE.2016.01.00466.
[24] C.-J. Liao, C.-F. Chen, J.-H. Chen, S.-F. Chiang, Y.-J. Lin, K.-Y. Chang, J. Biomed. Mater. Res. 2002, 59, 676.
[25] M. Speirs, J. Van Humbeeck, J. Schrooten, J. Luyten, J. P. Kruth, in Procedia CIRP, 2013, pp. 79-82.
[26] J. Pasquale, M. Marascio, P.-E. Bourban, Medical Grade Filaments for Fused Deposition Modeling: Processing and Application to Osteochondral Tissue Engineering, Lausanne, n.d**.**
[27] C. J. G. Plummer, P. E. Bourban, J. E. Zanetto, G. D. Smith, J. A. E. Månson, J. Appl. Polym. Sci. 2002, 87, 1267.
[28] S. Krauss, P. Fratzl, J. Seto, J. D. Currey, J. A. Estevez, S. S. Funari, H. S. Gupta, Bone 2009, 44, 1105.
[29] T. Patricio, M. Domingos, A. Gloria, P. Bártolo, in Procedia CIRP, 2013, pp. 110-114.
[30] R. Fang, E. Zhang, L. Xu, S. Wei, J. Nanosci. Nanotechnol. 2010, 10, 7747.
[31] M. Kikuchi, Y. Koyama, T. Yamada, Y. Imamura, T. Okada, N. Shirahama, K. Akita, K. Takakuda, J. Tanaka, Biomaterials 2004, 25, 5979.
[32] A. A. Ignatius, O. Betz, P. Augat, L. E. Claes, J. Biomed. Mater. Res. 2001, 58, 701.

## Claims

1. An additive manufacturing process for obtaining a customized 3D structure with a controlled macro and micro porosity, said process comprising the following steps:
- saturating a thermoplastic material with a supercritical gas, such as CO₂
- extruding and transforming said material into a filament
- depositing said filament in smaller spaced strands.

2. Process according to claim 1 wherein the saturation step occurs before the deposition step.

3. Process according to claim 1 wherein the saturation step occurs during the deposition step.

4. Process according to anyone of the previous claims wherein said material, prior to the extrusion step, is in the form of a filament, a powder or granules.

5. Process according to anyone of the previous claims wherein microporosity is adjusted with at least one of the following parameters : extrusion nozzle geometry, temperature and deposition speed.

6. 3D structure with a macro and micro porosity obtained by a process comprising the following steps:
- saturating a thermoplastic material with supercritical gas, such as CO₂
- extruding and transforming said material into a filament
- depositing said filament in smaller spaced strands;
wherein macropores are located between said strands and micropores are located within said strands.

7. Structure according to claim 6 wherein said macropores have a diameter between 0.3 and 10 mm.

8. Structure according to claim 5 or 6 wherein said micropores have a diameter between 1 µm and 300 µm with a controlled variation of size distribution in the radial and longitudinal directions of the strands

9. 3D printing machine for obtaining 3D structures with a controlled macro and micro porosity, said machine comprising:
- an extrusion unit
- a supercritical gas injection unit;
said supercritical gas injection unit being adapted to inject supercritical gas and saturate a thermoplastic material that pass through said extrusion unit.

10. Foam printing head for use in a process as defined in anyone of the previous process claims, said head comprising a material feeding channel (1), a saturation chamber (2) with a gas inlet (5), an expansion chamber (3) and a foam extrusion nozzle (4) with optionally a skin abrasion device (8).
